# FASCICULE DE BREVET EUROPEEN

(11) **EP 0 664 078 B1**
(45) Date de publication et mention de la délivrance du brevet: **18.08.1999**
(21) Numéro de dépôt: 95450001.3
(22) Date de dépôt: 19.01.1995
(51) Int. Cl.: A01G 13/10

(54) **Conteneur-protecteur perfectionné notamment pour plant de vigne**
Verbesserter Schutzbehälter, insbesondere für Reben
Improved portective container, especially for vine

(30) Priorité: 20.01.1994 FR 9400801
(43) Date de publication de la demande: 26.07.1995
(73) Titulaire: MERCIER FRANCE PHYTONIQUE SA, 85770 Le Gue de Velluire (FR)
(72) Inventeur: Mercier, Jean-Pierre, F-85770 Vix (FR)
(74) Mandataire: Thébault, Jean-Louis

(56) Documents cités:
- WO-A-91/15946
- CH-A- 456 229
- FR-A- 1 032 163
- FR-A- 2 643 786
- GB-A- 149 102
- GB-A- 2 104 366
- GB-A- 2 230 929
- GB-A- 2 249 704
- US-A- 5 245 878

## Description

La présente invention a trait à un conteneur-protecteur de jeunes plants et plus précisément à un dispositif de conditionnement permettant le stockage et le transport de ces jeunes plants ainsi que leur protection une fois mis en terre pendant la période de leur vie où ils sont le plus vulnérables.

L'invention s'applique en particulier aux plants de vigne mais également, et d'une manière générale, à tous plants ou arbustes, fruitiers ou non.

Par le document FR-2.643.786 on connaît un dispositif de ce genre, du type constitué par un fourreau comprenant deux parties, l'une, inférieure, destinée à être mise en terre au moins partiellement et enveloppant la motte du plant ainsi que ce dernier et, l'autre, supérieure, agencée de manière à permettre à volonté l'accès à l'intérieur, le matériau dudit fourreau étant suffisamment rigide pour que ce dernier serve de tuteur.

Un tel dispositif s'est révélé à l'usage, en dépit de ses indéniables qualités d'efficacité en particulier pour ce qui concerne la protection du végétal aussi bien avant sa mise en terre qu'après, insuffisant sur certains points tels que la facilité de réalisation et d'emploi et la résistance à certaines agressions, notamment vis à vis des chocs survenant au contact avec les guides de décavaillonnage.

La présente invention vise précisément à pallier ces divers inconvénients.

A cet effet, l'invention a pour objet un conteneur-protecteur perfectionné, notamment pour plant de vigne, du type constitué par un fourreau enveloppant le plant, comprenant une partie inférieure destinée à être mise en terre au moins partiellement et enveloppant le système racinaire du plant et une partie supérieure agencée de manière à permettre à volonté l'accès à l'intérieur, le matériau dudit fourreau étant suffisamment rigide pour que ce dernier serve de tuteur, caractérisé en ce l'ensemble du fourreau est constitué de deux demi-coques en forme générale de tube ouvert aux deux extrémités, articulées entre elles et refermables à l'aide de moyens de verrouillage appropriés, ladite partie inférieure étant prolongée à son extrémité par des projections en forme de dents de peigne destinées à retenir le système racinaire du plant ainsi que le substrat, ladite partie supérieure comportant, ménagée dans l'une des demi-coques, une partie ouvrante refermable à volonté, et en ce que les deux parties, inférieure et supérieure, sont séparées par une partie intermédiaire tubulaire de section réduites et de résistance mécanique renforcée par rapport aux parties adjacentes inférieure (PI) et supérieure (PS).

D'autres caractéristiques et avantages ressortiront de la description qui va suivre d'un mode de réalisation préféré du dispositif de l'invention, description donnée à titre d'exemple uniquement et en regard du dessin annexé sur lequel :
- Figure 1 est une vue en élévation d'un conteneur-protecteur constitué de deux demi-coques en position d'ouverture,
- Figure 2 est une vue en coupe suivant la ligne II-II du conteneur-protecteur de la figure 1, et
- Figure 3 est une vue en bout suivant la flèche III de la demi-coque de droite du conteneur-protecteur de la figure 1.

Le conteneur-protecteur représenté sur le dessin est formé de deux demi-coques 1a,1b sensiblement identiques et reliées le long d'un bord commun par une charnière souple.

Avantageusement l'ensemble du dispositif est réalisé en une seule pièce par moulage d'une matière plastique appropriée, par exemple du polypropylène, ladite charnière entre les deux demi-coques 1a,1b étant réalisée par un pontage de faible épaisseur assurant l'articulation nécessaire entre les demi-coques.

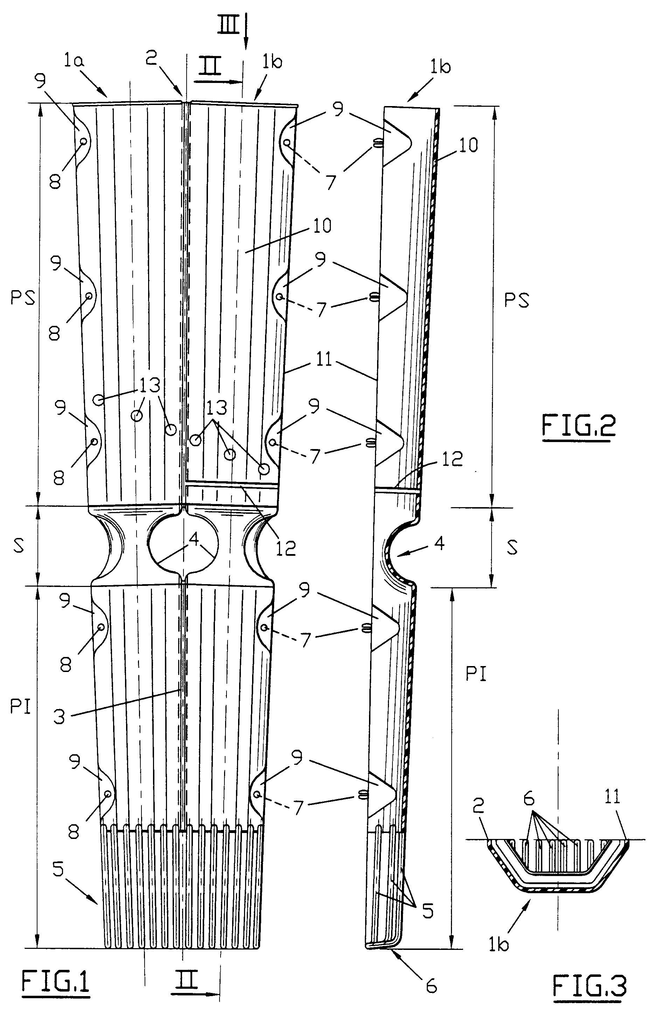

Plus précisément, le dispositif de l'invention est constitué d'un fourreau tubulaire formé par les deux demi-coques 1a,1b refermées. Sur la figure 1 les deux demi-coques sont vues côté extérieur.

Chaque demi-coque 1a,1b comporte une partie inférieure PI et une partie supérieure PS, reliées entre elles par une partie intermédiaire tubulaire S de hauteur et de dimensions réduites.

Les deux parties supérieures PS des deux demi-coques sont reliées par une charnière souple 2 et les deux parties inférieures PI par une charnière souple 3 dans l'alignement de la charnière 2.

Les deux demi-coques 1a,1b, une fois refermées l'une sur l'autre, constituent un fourreau tubulaire dont la section va en s'élargissant de bas en haut. Ledit fourreau a une section circulaire ou polygonale (comme illustré en figure 3), cette dernière forme assurant une meilleure rigidité.

La partie intermédiaire tubulaire S a une forme approximative de diabolo avec une partie centrale 4 par exemple de section circulaire et de diamètre sensiblement réduit par rapport au diamètre des parties adjacentes PI et PS. En outre, la paroi de la section S est sensiblement épaissie pour une raison qui sera explicitée plus loin.

A son extrémité inférieure les parties PI sont prolongées par des projections en forme de dents de peigne 5 parallèles et dont les extrémités 6 (figures 2 et 3) sont recourbées en direction du centre du fourreau en sorte qu'une fois les demi-coques 1a,1b refermées sur elles-mêmes pour constituer ledit fourreau, l'orifice inférieure de ce dernier est entièrement occupé par lesdites extrémités recourbées 6.

La partie inférieure du fourreau avec les dents 5 est destinée à contenir et retenir les racines, d'un plant de vigne par exemple, ainsi que le terreau d'accompagnement, en particulier du terreau spécial à base de fibres longues. Le système à dents 5 retient bien un tel substrat et favorise l'aération et l'expansion des racines une fois le plant en place.

Les deux demi-coques 1a,1b se referment l'une sur l'autre en se verrouillant grâce à des saillies 7 s'engageant à force, à la manière de boutons-pressions, dans des trous 8. Les saillies 7 et trous 8 sont ménagés dans des parties planes 9 réalisées en regard de place en place le long des bords 11 des demi-coques opposés aux charnières 2,3.

En outre, l'une des parties supérieures PS des demi-coques (1b) est elle-même ouvrante à l'aide d'un volet 10 constitué par presque toute la paroi de ladite partie supérieure et délimité par la charnière 2, le bord libre 11 opposé à la charnière 2 de la demi-coque 1b et, en partie inférieure, une découpe horizontale 12 s'étendant de la charnière 2 audit bord opposé 11.

La partie inférieure PI du conteneur-protecteur correspond à la partie qui doit être enterrée avec le plant à l'intérieur.

La partie S constitue à cet effet un repère et doit légèrement dépasser au dessus du sol. La forme et le renforcement de la partie S sont destinés à faciliter le passage des guides de décavaillonnage et à protéger le fourreau vis à vis de ces guides.

La partie S sert aussi de repère sur le positionnement du greffon.

A chaque fois qu'il sera nécessaire d'accéder à l'intérieur de la partie aérienne (PS) du fourreau, en particulier pour tailler le plant de vigne, on pourra très facilement ouvrir le volet 10 en dégrafant les organes 7,8, procéder à la taille, puis refermer le volet.

Cette partie aérienne (PS) est avantageusement munie d'ouvertures 13 pour l'aération de l'intérieur du fourreau. De préférence, les ouvertures 13 sont des trous circulaires disposés en hélice dans la zone inférieure de ladite partie aérienne PS, une telle disposition procurant une aération optimale.

L'ensemble des demi-coques et des éléments accessoires (dents 5, organes de verrouillage 7,8, trous d'aération 13, etc...) est avantageusement réalisé d'un bloc par une seule opération de moulage.

Enfin, l'invention n'est évidemment pas limitée au mode de réalisation représenté et décrit ci-dessus, mais en couvre au contraire toutes les variantes, notamment en ce qui concerne les formes, dimensions et dispositions des parties PI,PS,S, des projections (5,6) de retenue du système racinaire, du volet 10 d'accès à la partie aérienne PS du fourreau, des moyens de solidarisation/désolidarisation des bords libres 11 des deux demi-coques 1a,1b.

Le volet 10 peut être, en variante, constitué par une partie séparable de la partie aérienne PS du fourreau, des moyens de solidarisation/désolidarisation étant prévus à cet effet entre les deux parties, avec éventuellement un petit pontage ou attache de retenue dudit volet.

## Revendications

1. Conteneur-protecteur perfectionné, notamment pour plant de vigne, du type constitué par un fourreau enveloppant le plant, comprenant une partie inférieure (PI) destinée à être mise en terre au moins partiellement et enveloppant le système racinaire du plant et une partie supérieure (PS) agencée de manière à permettre à volonté l'accès à l'intérieur, le matériau dudit fourreau étant suffisamment rigide pour que ce dernier serve de tuteur, caractérisé en ce que l'ensemble du fourreau est constitué de deux demi-coques (1a,1b) en forme générale de tube ouvert aux deux extrémités, articulées entre elles et refermables à l'aide de moyens de verrouillage appropriés (7,8), ladite partie inférieure (PI) étant prolongée à son extrémité par des projections en forme de dents de peigne (5) destinées à retenir le système racinaire du plant ainsi que le substrat, ladite partie supérieure (PS) comportant, ménagée dans l'une des demi-coques (1b), une partie ouvrante (10) refermable à volonté, et en ce que les deux parties, inférieure (PI) et supérieure (PS), sont séparées par une partie intermédiaire tubulaire (S) de section réduite et de résistance mécanique renforcée par rapport aux parties adjacentes inférieure (PI) et supérieure (PS).

2. Conteneur-protecteur suivant la revendication 1, caractérisé en ce que les deux demi-coques (1a,1b) sont réalisées par moulage d'une matière plastique appropriée, l'articulation entre les demi-coques étant constituée par des charnières souples (2,3) venues de moulage.

3. Conteneur-protecteur suivant la revendication 1 ou 2, caractérisé en ce que ladite partie intermédiaire (S) présente une partie centrale cylindrique (4) de diamètre réduit par rapport à celui des parties adjacentes inférieure (PI) et supérieure (PS).

4. Conteneur-protecteur suivant l'une des revendications 1 à 3, caractérisé en ce que lesdites dents de peigne (5) ont leur extrémité (6) recourbée en direction du centre du fourreau.

5. Conteneur-protecteur suivant l'une des revendications 1 à 4, caractérisé en ce que les parties inférieure (PI) et supérieure (PS) ont une section qui va en s'élargissant de bas en haut.

6. Conteneur-protecteur suivant l'une des revendications 1 à 5, caractérisé en ce que les parties inférieure (PI) et supérieure (PS) ont une section circulaire.

7. Conteneur-protecteur suivant l'une des revendications 1 à 5, caractérisé en ce que les parties inférieure (PI) et supérieure (PS) ont une section polygonale.

8. Conteneur-protecteur suivant l'une des revendications 2 à 7, caractérisé en ce que ladite partie ouvrante est constituée par un volet (10) délimité par la charnière associée (2), le bord (11) opposé à la charnière et une ligne de découpe horizontale (12) ménagée entre ladite charnière (2) et ledit bord (11).

9. Conteneur-protecteur suivant l'une des revendications 1 à 8, caractérisé en ce que les bords desdites parties inférieure (PI) et supérieure (PS) opposés à ladite articulation (2,3), sont munis de moyens de solidarisation/désolidarisation, notamment du type bouton-pression (7,8).

10. Conteneur-protecteur suivant l'une des revendications 1 à 9, caractérisé en ce que les parties supérieures (PS) des demi-coques (1a,1b) sont percées d'ouvertures d'aération (13) disposées en hélice.

## Claims

1. Improved protective container, notably for a vine plant, of the type consisting of a sheath enclosing the plant, comprising a bottom part (PI) intended to be at least partially set in the earth and enclosing the plant root system and a top part (PS) arranged so as to afford access as wished to the inside, the material of the said sheath being sufficiently rigid for the latter to serve as a support, characterised in that the entire sheath consists of two half shells (1a, 1b) in the general shape of a tube open at both ends, articulated on each other and able to be closed by means of suitable locking means (7, 8), said bottom part (PI) being extended at its end by projections in the form of comb teeth (5) intended to hold the plant root system as well as the subsoil, said top part (PS) comprising, provided in one of the half shells (1b), an opening part (10) which can be reclosed as wished, and in that the two parts, bottom (PI) and top (PS), are separated by a tubular intermediate part (S) with a reduced cross section and increased mechanical strength compared with the adjacent bottom (PI) and top (PS) parts.

2. Protective container according to Claim 1, characterised in that the two half shells (1a, 1b) are produced by moulding from a suitable plastics material, the articulation between the half shells consisting of flexible hinges (2, 3) moulded in one piece.

3. Protective container according to Claim 1 or 2, characterised in that said intermediate part (S) provides a cylindrical central part (4) with a reduced diameter compared with that of the adjacent bottom (PI) and top (PS) parts.

4. Protective container according to one of Claims 1 to 3, characterised in that said comb teeth (5) have their end (6) curved in the direction of the centre of the sheath.

5. Protective container according to one of Claims 1 to 4, characterised in that the bottom (PI) and top (PS) parts have a cross section which broadens from bottom to top.

6. Protective container according to one of Claims 1 to 5, characterised in that the bottom (PI) and top (PS) parts have a circular cross section.

7. Protective container according to one of Claims 1 to 5, characterised in that the bottom (PI) and top (PS) parts have a polygonal cross section.

8. Protective container according to one of Claims 2 to 7, characterised in that said opening part consists of a flap (10) delimited by the associated hinge (2), the edge (11) opposite to the hinge and a horizontal cutting line (12) provided between said hinge (2) and said edge (11).

9. Protective container according to one of Claims 1 to 8, characterised in that the edges of said bottom (PI) and top (PS) parts opposite said articulation (2, 3) are provided with connection/disconnection means, notably of the push button type (7, 8).

10. Protective container according to one of Claims 1 to 9, characterised in that the top parts (PS) of the half shells (1a, 1b) are provided with ventilation openings (13) disposed in a helix.

## Patentansprüche

1. Vervollkommneter Schutzbehälter, insbesondere für Reben, des Typs, der aus einer die Pflanze umgebenden Hülse gebildet ist, die einen unteren Teil (PI), der dazu vorgesehen ist, wenigstens teilweise in den Boden gesteckt zu werden, und der das Wurzelwerk der Pflanze umgibt, und einen oberen Teil (PS), der so beschaffen ist, daß er einen beliebigen Zugang in den Innenraum ermöglicht, umfaßt, wobei das Material der Hülse ausreichend starr ist, damit diese letztere als Stütze dient, dadurch gekennzeichnet, daß die gesamte Hülse gebildet ist aus zwei Halbschalen (1a, 1b) mit der allgemeinen Form eines an den beiden Enden offenen Rohrs, die aneinander angelenkt sind und mit Hilfe von geeigneten Verriegelungsmitteln (7, 8) verschließbar sind, wobei der untere Teil (PI) an seinem Ende durch Vorsprünge in Form von Zinken (5) verlängert ist, die dazu vorgesehen sind, das Wurzelwerk der Pflanze sowie das Erdreich zu halten, wobei der obere Teil (PS) einen in einer (1b) der Halbschalen ausgebildeten zu öffnenden Teil (10) besitzt, der beliebig geschlossen werden kann, und daß die beiden Teile, der untere (PI) und der obere (PS), durch einen röhrenförmigen Zwischenteil (S) mit verringertem Querschnitt und einer in bezug auf die angrenzenden unteren (PI) und oberen (PS) Teile verstärkten mechanischen Festigkeit getrennt sind.

2. Schutzbehälter nach Anspruch 1, dadurch gekennzeichnet, daß die beiden Halbschalen (1a, 1b) durch Gießen eines geeigneten Kunststoffs hergestellt sind, wobei die Anlenkung der beiden Halbschalen durch biegsame Gelenke (2, 3), die sich aus dem Gießen ergeben, gebildet ist.

3. Schutzbehälter nach Anspruch 1 oder 2, dadurch gekennzeichnet, daß der Zwischenteil (S) einen zylindrischen Mittelteil (4) mit in bezug auf den Durchmesser der angrenzenden unteren (PI) und oberen (PS) Teile reduziertem Durchmesser aufweist.

4. Schutzbehälter nach einem der Ansprüche 1 bis 3, dadurch gekennzeichnet, daß die Zinken (5) an ihrem Ende (6) in Richtung zur Hülsenmitte umgebogen sind.

5. Schutzbehälter nach einem der Ansprüche 1 bis 4, dadurch gekennzeichnet, daß die unteren (PI) und oberen (PS) Teile einen Querschnitt besitzen, der sich von unten nach oben erweitert.

6. Schutzbehälter nach einem der Ansprüche 1 bis 5, dadurch gekennzeichnet, daß die unteren (PI) und oberen (PS) Teile einen kreisförmigen Querschnitt besitzen.

7. Schutzbehälter nach einem der Ansprüche 1 bis 5, dadurch gekennzeichnet, daß die unteren (PI) und oberen (PS) Teile einen polygonförmigen Querschnitt besitzen.

8. Schutzbehälter nach einem der Ansprüche 2 bis 7, dadurch gekennzeichnet, daß der zu öffnende Teil durch eine Klappe (10) gebildet ist, die durch das zugeordnete Gelenk (2), den dem Gelenk gegenüberliegenden Rand (11) und eine horizontale Schnittlinie (12), die zwischen dem Gelenk (2) und dem Rand (11) ausgebildet ist, begrenzt ist.

9. Schutzbehälter nach einem der Ansprüche 1 bis 8, dadurch gekennzeichnet, daß die Ränder der unteren (PI) und oberen (PS) Teile gegenüber der Anlenkung (2, 3) mit Befestigungs-/Befestigungslöse-Mitteln, insbesondere des Typs Druckknopf (7, 8), versehen sind.

10. Schutzbehälter nach einem der Ansprüche 1 bis 9, dadurch gekennzeichnet, daß die oberen Teile (PS) der Halbschalen (1a, 1b) mit schraubenlinienförmig angeordneten Belüftungsöffnungen (13) durchlocht sind.
